# EUROPEAN PATENT APPLICATION

(11) **EP 4 693 451 A1**
(43) Date of publication of application: **11.02.2026**
(21) Application number: 24779683.2
(22) Date of filing: 18.03.2024
(51) Int. Cl.: H01M 4/139, H01G 11/24, H01M 4/13, H01M 4/62

(54) **COMPOSITE PARTICLES**

(30) Priority: 31.03.2023 JP 2023059380
(71) Applicant: Zeon Corporation, Tokyo 100-8246 (JP)
(72) Inventor: OSHIDA, Noriyuki, Tokyo 100-8246 (JP)
(74) Representative: Maiwald GmbH
(86) International application number: PCT/JP2024/010606
(87) International publication number: WO 2024/203558

(57) **Abstract**

Provided are composite particles having low electrical conductivity. The composite particles contain an electrode active material, a conductive material, and a binder. The composite particles have a breaking point test force of not less than 0.40 mN and not more than 1.60 mN when compressed at a loading rate of 0.04 mN/s using a micro compression tester.

## Description

### TECHNICAL FIELD

The present disclosure relates to composite particles, and, in particular, relates to composite particles that are for use in dry forming of an electrode for an electrochemical device.

### BACKGROUND

Electrochemical devices such as lithium ion secondary batteries have characteristics such as compact size, light weight, high energy density, and the ability to be repeatedly charged and discharged, and are used in a wide variety of applications.

Various improvements are being made to materials used in the formation of electrochemical device electrodes in order to improve the performance of electrochemical devices. An electrode for an electrochemical device has a structure in which an electrode mixed material layer is disposed on an electrode substrate, wherein the electrode mixed material layer contains an electrode active material as a main component and also contains other components such as a conductive material and a binder as necessary in order to impart characteristic functions such as electrical conductivity, close adherence, and flexibility to the electrode. From a viewpoint of improving electrochemical device performance, it is preferable that the electrode active material and the other components are uniformly dispersed in the electrode mixed material layer.

Examples of methods of forming an electrode mixed material layer that have previously been studied include a method in which a slurry composition containing an electrode active material, a conductive material, a binder, and a solvent is applied onto and dried on an electrode substrate to form an electrode mixed material layer and a method in which a slurry composition containing an electrode active material, a conductive material, a binder, and a solvent is subjected to spray drying or the like to obtain composite particles, and then the obtained composite particles are subjected to pressure forming on an electrode substrate to form an electrode mixed material layer.

Known examples of composite particles for an electrochemical device electrode include composite particles for an electrochemical device electrode that are obtained by a method of spray drying a slurry containing an electrode active material, a conductive material, and a binder to perform granulation and then heating the particles to cause cross-linking and curing of the binder, for example, and that have a weight average particle diameter of 0.1 µm to 1,000 µm and result in a particle diameter displacement rate of 5% to 70% when compressed to a maximum load of 9.8 mN at a loading rate of 0.9 mN/sec using a micro compression tester (for example, refer to Patent Literature (PTL) 1). Another known example is composite particles for an electrochemical device electrode that are characterized by containing a positive electrode active material, a conductive additive, a binding resin, and water-insoluble polysaccharide polymer fibers (for example, refer to PTL 2).

### CITATION LIST

### Patent Literature

PTL 1: JP2006-310628A
PTL 2: WO2014/185365A1

### SUMMARY

### (Technical Problem)

However, conventional granulated particles leave room for further improvement with regards to properties of an electrode that is formed using obtained granulated particles and an electrochemical device that includes the electrode.

Accordingly, an object of the present disclosure is to provide composite particles having low electrical resistance.

### (Solution to Problem)

The inventor conducted diligent investigation with the aim of solving the problem set forth above. The inventor made a new discovery that composite particles having a breaking strength that is within a specific range have low electrical resistance, and, in this manner, completed the present disclosure.

Specifically, with the aim of advantageously solving the problem set forth above, [1] presently disclosed composite particles are composite particles for use in dry forming of an electrode for an electrochemical device, comprising an electrode active material, a conductive material, and a binder, wherein the composite particles have a breaking point test force of not less than 0.40 mN and not more than 1.60 mN when compressed at a loading rate of 0.04 mN/s using a micro compression tester. Such composite particles have low electrical resistance.

[2] In the composite particles according to the foregoing [1], the binder preferably has a weight-average molecular weight of not less than 0.1 × 10⁵ and not more than 10.0 × 10⁵.

### (Advantageous Effect)

According to the present disclosure, it is possible to provide composite particles having low electrical resistance.

### BRIEF DESCRIPTION OF THE DRAWINGS

In the accompanying drawings:
FIG. 1 is a plan view illustrating one example of a granulation tank that can be used to produce presently disclosed composite particles; and
FIG. 2 is a cross-sectional view at a sectioning line A-A indicated in FIG. 1.

### DETAILED DESCRIPTION

The following provides a detailed description of embodiments of the present disclosure.

The presently disclosed composite particles can be advantageously used as a component that is compounded in an electrode mixed material layer included in an electrode of an electrochemical device such as a secondary battery.

### (Composite particles)

The presently disclosed composite particles are composite particles for use in dry forming of an electrode for an electrochemical device. These composite particles contain an electrode active material, a conductive material, and a binder. Moreover, these composite particles are required to have a breaking point test force (hereinafter, also referred to as breaking strength) of not less than 0.40 mN and not more than 1.60 mN when compressed at a loading rate of 0.04 mN/s using a micro compression tester. Composite particles that contain an electrode active material, a conductive material, and a binder and that also have the specific breaking strength set forth above have sufficiently low electrical resistance. Although the reason for this is not clear, composite particles having a breaking strength within the range set forth above have low strength compared to conventional composite particles while at the same time not being excessively fragile. Consequently, it is possible to reduce the electrical resistance when a specific pressure is applied such as subsequently described in the EXAMPLES section, for example.

### <Breaking point test force (breaking strength)>

The breaking strength of the composite particles is required to be not less than 0.40 mN and not more than 1.60 mN, and is preferably 1.30 mN or less, and more preferably 1.00 mN or less. When the breaking strength is not less than the lower limit set forth above, crushing of the composite particles during electrode mixed material layer formation can be effectively inhibited, production efficiency can be increased, and internal resistance of an obtained electrode mixed material layer can be effectively reduced. When the breaking strength is not more than any of the upper limits set forth above, internal resistance of an electrode mixed material layer can be effectively reduced, presumably because the composite particles can deform to a suitable degree during electrode mixed material layer formation and a good electrical conduction network can be formed between particles in an obtained electrode mixed material layer.

### <Electrode active material>

Positive electrode active materials and negative electrode active materials that can be used in the production of electrochemical devices can be used as the electrode active material without any specific limitations. Specifically, examples of positive electrode active materials that may be used include, but are not specifically limited to, known positive electrode active materials such as lithium-containing cobalt oxide (lithium cobalt oxide, LiCoO₂), lithium manganate (LiMn₂O₄), lithium-containing nickel oxide (LiNiO₂), a lithium-containing complex oxide of Co-Ni-Mn (Li(Co Mn Ni)O₂), a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a Li₂MnO₃-LiNiO₂-based solid solution, a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄. Moreover, examples of negative electrode active materials that may be used include carbon-based negative electrode active materials, metal-based negative electrode active materials, and negative electrode active materials that are a combination thereof.

The volume-average particle diameter of the electrode active material is preferably 0.03 µm or more, more preferably 0.1 µm or more, and even more preferably 0.5 µm or more, and is preferably 500 µm or less, more preferably 200 µm or less, and even more preferably 30 µm or less. The particle diameter of the electrode active material can be measured by laser diffraction. More specifically, it is preferable that the particle diameter D50 at which cumulative volume calculated from a small diameter end of a particle diameter distribution (by volume) measured using a laser diffraction particle size analyzer reaches 50% is taken to be the volume-average particle diameter and that the value thereof satisfies any of the particle diameter ranges set forth above. When the particle diameter of the electrode active material is not more than any of the upper limits set forth above, this enables a more homogeneous chemical composition inside of the composite particles. Moreover, when the particle diameter of the electrode active material is not more than any of the upper limits set forth above, the electrode density of an obtained electrode can be increased, and electrochemical reactions when an electrochemical device is formed can be optimized as a result of the specific surface area of the electrode active material being sufficiently large. When the particle diameter of the electrode active material is not less than any of the lower limits set forth above, handleability in production of the composite particles improves, and producibility of the composite particles also improves. Moreover, when the particle diameter of the electrode active material is not less than any of the lower limits set forth above, this enables good inhibition of degradation of the electrode active material upon repeated charging and discharging of an electrochemical device.

### <Conductive material>

Carbon black (for example, acetylene black, Ketjenblack^{®} (Ketjenblack is a registered trademark in Japan, other countries, or both), or furnace black), single-walled or multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer or multilayer graphene, or the like can be used as the conductive material without any specific limitations. One of these conductive materials can be used individually, or a plurality of these conductive materials can be used in combination.

In a case in which the conductive material is carbon black, the volume-average particle diameter of the conductive material is preferably 5 nm or more, and more preferably 12 nm or more, and is preferably 500 nm or less, and more preferably 100 nm or less. When the volume-average particle diameter of the conductive material is not less than any of the lower limits set forth above, a good electrical conduction network can be formed, and electrical resistance of the composite particles can be effectively reduced. Consequently, it is thought to be possible to even further reduce the resistance of an obtained electrode through use of these composite particles. Moreover, when the volume-average particle diameter of the conductive material is not more than any of the upper limits set forth above, this is thought to enable a more homogeneous chemical composition inside the composite particles and also increased electrode density of an obtained electrode. Note that the volume-average particle diameter of the conductive material represents the particle diameter (D50) at which cumulative volume calculated from a small diameter end of a particle diameter distribution (by volume) measured by laser diffraction reaches 50%.

The quantitative ratio of the electrode active material and the conductive material is not specifically limited and can be set as a typical quantitative ratio in which these materials are contained in an electrode for an electrochemical device.

### <Binder>

A conjugated diene polymer, an acrylic polymer, an aromatic vinyl block polymer, a fluoropolymer, a cellulosic polymer, a cycloolefinic polymer, or the like, for example, can be used as the binder without any specific limitations. One binder may be used individually, or two or more binders may be used in combination. Of these binders, an aromatic vinyl block polymer is preferable.

The term "conjugated diene polymer" refers to a polymer that includes a conjugated diene monomer unit. Specific examples of the conjugated diene polymer include, but are not specifically limited to, a copolymer that includes an aromatic vinyl monomer unit and an aliphatic conjugated diene monomer unit such as a styrene-butadiene copolymer (SBR), butadiene rubber (BR), acrylic rubber (NBR) (copolymer including an acrylonitrile unit and a butadiene unit), and hydrogenated products thereof.

The acrylic polymer may be a polymer that includes a cross-linkable monomer unit, a (meth)acrylic acid ester monomer unit, and an acidic group-containing monomer unit, for example, but is not specifically limited thereto. Note that the proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less.

The aromatic vinyl block polymer may be a block polymer that includes a block region composed of aromatic vinyl monomer units. The aromatic vinyl monomer may be styrene, styrene sulfonic acid or a salt thereof, α-methylstyrene, p-t-butylstyrene, butoxystyrene, vinyltoluene, chlorostyrene, or vinylnaphthalene, for example, of which, styrene is preferable. The aromatic vinyl block polymer is preferably a styrene-isoprene-styrene block copolymer, a styrene-butadiene-styrene copolymer, a hydrogenated product of either thereof, or the like. In particular, the aromatic vinyl block polymer is preferably a styrene-ethylene/butylene-styrene block copolymer that is a hydrogenated product of a styrene-butadiene-styrene copolymer.

The term "fluoropolymer" refers to a polymer that includes a fluorine-containing monomer unit and that may further include a unit of a monomer that does not contain fluorine (non-fluorine-containing monomer). The fluorine-containing monomer may be vinylidene fluoride, tetrafluoroethylene, hexafluoropropylene, trifluorovinyl chloride, vinyl fluoride, trifluoroethylene, trifluorochloroethylene, 2,3,3,3-tetrafluoropropene, perfluoroalkyl vinyl ether, or the like, for example, but is not specifically limited thereto. The fluoropolymer may be polytetrafluoroethylene, polychlorotrifluoroethylene, polyvinylidene fluoride, polyvinyl fluoride, a perfluoroalkoxy fluororesin, a tetrafluoroethylene-hexafluoropropylene copolymer, an ethylene-tetrafluoroethylene copolymer, an ethylene-chlorotrifluoroethylene copolymer, a vinylidene fluoride-hexafluoropropylene copolymer, or the like, but is not specifically limited thereto.

The cellulosic polymer may be cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or the like, for example, but is not specifically limited thereto.

The cycloolefinic polymer may be a polymer (addition polymer or ring-opened polymer) synthesized using a cycloolefin compound as a monomer or a hydrogenated product thereof, or may be a hydrogenated product of a polymer obtained using an aromatic vinyl compound as a monomer, for example, but is not specifically limited thereto. Of these examples, a hydrogenated product of a ring-opened polymer obtained using a cycloolefin compound as a monomer and a hydrogenated product of a polymer obtained using an aromatic vinyl compound as a monomer are preferable due to the ease of adjusting the degree of swelling in electrolyte solution and glass-transition temperature to suitable magnitudes.

Examples of the cycloolefin compound include, but are not specifically limited to:
norbornenes that are unsubstituted or include an alkyl group such as norbornene, 5-methylnorbornene, 5-ethylnorbornene, 5-butylnorbornene, 5-hexylnorbornene, 5-decylnorbornene, 5-cyclohexylnorbornene, and 5-cyclopentylnorbornene;
norbornenes that include an alkenyl group such as 5-ethylidenenorbornene, 5-vinylnorbornene, 5-propenylnorbornene, 5-cyclohexenylnorbornene, and 5-cyclopentenylnorbornene;
norbornenes that include an aromatic ring such as 5-phenylnorbornene;
norbornenes that include an oxygen atom-containing polar group such as 5-methoxycarbonylnorbornene, 5-ethoxycarbonylnorbornene, 5-methyl-5-methoxycarbonylnorbornene, 5-methyl-5-ethoxycarbonylnorbornene, norbornenyl-2-methylpropionate, norbornenyl-2-methyloctanoate, 5-hydroxymethylnorbornene, 5,6-di(hydroxymethyl)norbornene, 5,5-di(hydroxymethyl)norbornene, 5-hydroxy-i-propylnorbornene, 5,6-dicarboxynorbornene, and 5-methoxycarbonyl-6-carboxynorbornene;
norbornenes that include a nitrogen atom-containing polar group such as 5-cyanonorbornene;
polycyclic norbornenes including three or more rings that do not include an aromatic ring structure such as dicyclopentadiene, methyldicyclopentadiene, and tricyclo[5.2.1.02,6]dec-8-ene;
polycyclic norbornenes including three or more rings that include an aromatic ring such as tetracyclo[9.2.1.02,10.03,8]tetradeca-3,5,7,12-tetraene (also referred to as 1,4-methano-1,4,4a,9a-tetrahydro-9H-fluorene) and tetracyclo[10.2.1.02,11.04,9]pentadeca-4,6,8,13-tetraene (also referred to as 1,4-methano-1,4,4a,9,9a,10-hexahydroanthracene);
tetracyclododecenes that are unsubstituted or include an alkyl group such as tetracyclododecene, 8-methyltetracyclododecene, 8-ethyltetracyclododecene, 8-cyclohexyltetracyclododecene, 8-cyclopentyltetracyclododecene, and 8-methoxycarbonyl-8-methyltetracyclo[4.4.0.12,5.17,10]-3-dodecene;
tetracyclododecenes that include a double bond outside of a ring such as 8-methylidenetetracyclododecene, 8-ethylidenetetracyclododecene, 8-vinyltetracyclododecene, 8-propenyltetracyclododecene, 8-cyclohexenyltetracyclododecene, and 8-cyclopentenyltetracyclododecene;
tetracyclododecenes that include an aromatic ring such as 8-phenyltetracyclododecene;
tetracyclododecenes that include an oxygen atom-containing substituent such as 8-methoxycarbonyltetracyclododecene, 8-methyl-8-methoxycarbonyltetracyclododecene, 8-hydroxymethyltetracyclododecene, 8-carboxytetracyclododecene, tetracyclododecene-8,9-dicarboxylic acid, and tetracyclododecene-8,9-dicarboxylic acid anhydride;
tetracyclododecenes that include a nitrogen atom-containing substituent such as 8-cyanotetracyclododecene and tetracyclododecene-8,9-dicarboxylic acid imide;
tetracyclododecenes that include a halogen atom-containing substituent such as 8-chlorotetracyclododecene;
tetracyclododecenes that include a silicon atom-containing substituent such as 8-trimethoxysilyltetracyclododecene; and
hexacycloheptadecenes such as a Diels-Alder adduct of a tetracyclododecene such as described above and cyclopentadiene.

Of these examples, non-polar norbornene-based monomers are preferable as the cycloolefin compound, and norbornenes that are unsubstituted or include an alkyl group (for example, norbornene and 8-ethyltetracyclododecene), norbornenes that include an alkenyl group (for example, ethylidenetetracyclododecene (8-ethylidenetetracyclododecene)), dicyclopentadiene, norbornene derivatives that include an aromatic ring (for example, tetracyclo[9.2.1.02,10.03,8]tetradeca-3,5,7,12-tetraene (also referred to as 1,4-methano-1,4,4a,9a-tetrahydro-9H-fluorene)), and tetracyclododecenes that are unsubstituted or include an alkyl group (for example, tetracyclododecene and 8-methoxycarbonyl-8-methyltetracyclo[4.4.0.12,5.17,10]-3-dodecene) are more preferable as the cycloolefin compound.

Note that although the optionally hydrogenated polymer obtained using a cycloolefin compound as a monomer may be a polymer obtained using only a cycloolefin compound as a monomer or a polymer obtained using a cycloolefin compound and a copolymerizable compound other than a cycloolefin compound as monomers, the polymer is preferably a polymer obtained using only a cycloolefin compound as a monomer.

Moreover, the optionally hydrogenated polymer obtained using a cycloolefin compound as a monomer is preferably a polymer obtained using tetracyclododecene, dicyclopentadiene, and norbornene as monomers, and more preferably a ring-opened polymer obtained using tetracyclododecene, dicyclopentadiene, and norbornene as monomers.

The weight-average molecular weight of the binder is preferably 0.1 × 10⁵ or more, more preferably 0.5 × 10⁵ or more, even more preferably 1.0 × 10⁵ or more, and particularly preferably 1.3 × 10⁵ or more, and is preferably 10.0 × 10⁵ or less, more preferably 5.0 × 10⁵ or less, and even more preferably 3.0 × 10⁵ or less. When the weight-average molecular weight of the binder is within any of the ranges set forth above, this is presumed to enable efficient control of the breaking strength of the composite particles to within a suitable range.

### <Other components>

The composite particles may contain other components besides those described above as necessary without any specific limitations.

### <Production method of composite particles>

The presently disclosed composite particles can be efficiently produced in a granulation tank that includes two or more agitators having different stirring axes to one another. Moreover, the presently disclosed composite particles set forth above can be efficiently produced using this granulation tank by adding a composition containing the binder and a solvent to the electrode active material with the electrode active material in a stirred state.

### <Granulation tank>

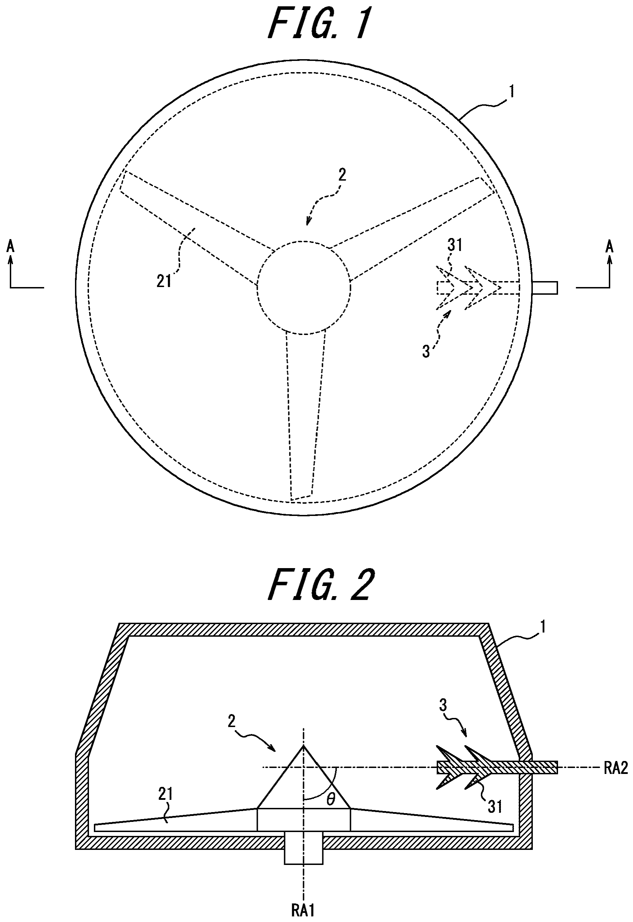

The granulation tank is required to include two or more agitators having different stirring axes to one another. The inclusion of two or more agitators having different stirring axes to one another results in increased uniformity of chemical composition of the obtained composite particles. One example of a granulation tank that can be used in production of the presently disclosed composite particles is described below with reference to FIGS. 1 and 2. FIG. 1 is a plan view of a granulation tank 1, and FIG. 2 is a cross-sectional view at a sectioning line A-A indicated in FIG. 1. The granulation tank 1 includes a main agitator 2 and an auxiliary agitator 3 having a different stirring axis to the main agitator 2. Note that the number of agitators is not specifically limited so long as it is two or more. The inclusion of two or more agitators can increase the uniformity of chemical composition of the composite particles.

Although not illustrated, the granulation tank 1 also includes at least one supply means that is capable of supplying a liquid composition. The supply means may be a spray nozzle that is configured so as to be capable of supplying a liquid material as a mist or may be a dropping funnel. The number of supply means is not specifically limited, and a plurality of supply means in accordance with the size of the granulation tank may be arranged at positions separated from one another. Moreover, although not illustrated, the granulation tank 1 can include a supply port for a powder material such as an electrode active material and a discharge port configured so as to be capable of discharging composite particles that are formed.

In FIG. 2, a stirring axis of the main agitator 2 is indicated by a dashed line as a first stirring axis RA1, and a stirring axis of the auxiliary agitator is indicated by a dashed line as a second stirring axis RA2. In FIG. 2, an angle θ that is formed by the first stirring axis RA1 and the second stirring axis RA2 is approximately 90°. Note that the angle formed by the first stirring axis RA1 and the second stirring axis RA2 is taken to be an angle at an acute side among angles that are formed by these two axes. The phrase "different stirring axes to one another" as used in the present specification means that an angle θ formed by the stirring axes is not less than 20° and not more than 90°. The angle θ formed by the stirring axes is preferably 30° or more, more preferably 45° or more, and even more preferably 85° or more. When the angle θ formed by the stirring axes is within any of the ranges set forth above, this enables effective stirring of a powder material and good control of increased size and increased coefficient of variation of the particle diameter of the obtained composite particles. Note that the "coefficient of variation" refers to the coefficient of variation of a particle diameter distribution of the composite particles and is a value obtained by dividing the standard deviation of area-equivalent diameter of the composite particles by the average value of area-equivalent diameter and then expressing the resultant value as a percentage.

No specific limitations are placed on the shape of the granulation tank so long as the granulation tank is capable of accommodating a powder material containing the electrode active material inside thereof for a specific time and is capable of performing stirring through the two or more agitators. For example, the shape of the granulation tank may be a circular tube shape in which a bottom surface and a top surface each have a circular shape and in which an upper part in a height direction is tapered like the granulation tank 1 illustrated in FIGS. 1 and 2. Note that in a case in which the shape of the granulation tank is a specific circular tube shape such as illustrated in FIGS. 1 and 2, one of the two or more stirring axes may correspond to a central axis of the circular tube and another of the stirring axes may correspond to a direction perpendicular to the central axis.

The main agitator 2 includes three main blades 21. No specific limitations are placed on the shape and number of main blades 21. The auxiliary agitator 3 includes two auxiliary blades 31. The auxiliary blades 31 are illustrated as anchor blades in FIGS. 1 and 2 but are not limited thereto. Moreover, the number of auxiliary blades 31 is not limited to the illustrated configuration and may be one or may be three or more. Although not illustrated, the granulation tank 1 can further include a ventilation mechanism configured such as to be capable of inhibiting a powder material from entering into driving parts of the main agitator 2 and the auxiliary agitator 3 through air ventilation.

Examples of granulation tanks satisfying conditions such as set forth above that can be used include a High Speed Mixer produced by EarthTechnica Co., Ltd., a Henschel Mixer produced by Mitsui Mining Co., Ltd. (currently FM Mixer produced by Nippon Coke & Engineering Co., Ltd.), a Vertical Granulator produced by Powrex Corporation, a CF Granulator produced by Freund Corporation, a Nara Mixer and Granulator produced by Nara Machinery Co., Ltd., an SP Granulator produced by Dalton Corporation, and a Balance Gran produced by Freund Corporation.

The following describes an example of operations for producing the presently disclosed composite particles using a granulation tank such as described above.

First, an electrode active material is loaded into the granulation tank. A dispersion liquid containing a conductive material, a binder, and a solvent is separately prepared. Stirring of the granulation tank is initiated so as to place the electrode active material in a stirred state inside of the granulation tank, and the dispersion liquid described above is added into the granulation tank. The mode of addition at this time is not specifically limited so long as it is a mode other than single batch addition. For example, continuous addition or intermittent addition with one or a plurality of addition suspension periods interposed may be adopted. Of these examples, continuous addition is preferable. In an atmosphere in which all of the electrode active material and the dispersion liquid (containing the binder and the conductive material) are placed in a stirred state together, a particle adjustment effect can arise through collisions between particles and between particles and the solvent while composite particles of the electrode active material, the binder, and the conductive material are gradually formed. In other words, a composite particle formation effect and a particle adjustment effect can proceed concurrently in the presence of the solvent during stirring.

The means of addition in addition of the composition containing the binder and the solvent to the powder material may be a spray nozzle, a dropping funnel, or the like as previously described. Of these examples, the use of a spray nozzle is preferable from a viewpoint of efficiency.

Any solvent in which the above-described binder can be dissolved can be used without any specific limitations as the solvent that can be used in production of the dispersion liquid containing the binder and the conductive material. For example, an organic solvent such as N-methyl-2-pyrrolidone, cyclohexane, n-hexane, acetone, methyl ethyl ketone, ethyl acetate, tetrahydrofuran, methylene chloride, or chloroform can be used as the solvent. In particular, it is preferable to use a non-aqueous solvent having a boiling point of 95°C or lower at 1 atm from a viewpoint of efficiently removing the solvent inside of the granulation tank and reducing drying energy in formation of the composite particles. The boiling point of the non-aqueous solvent at 1 atm is more preferably 90°C or lower, and even more preferably 85°C or lower from a viewpoint of even better achieving this effect. Although no specific limitations are placed on the lower limit for the boiling point of the non-aqueous solvent at 1 atm, the boiling point is preferably 50°C or higher from a viewpoint of increasing stability in formation of the composite particles. Examples of solvents satisfying this condition include cyclohexane, n-hexane, acetone, methyl ethyl ketone, ethyl acetate, tetrahydrofuran, methylene chloride, chloroform, and so forth. One of these solvents may be used individually, or two or more of these solvents may be used in combination in a freely selected ratio.

The solid content concentration of the dispersion liquid containing the conductive material, the binder, and the solvent that is continuously added into the granulation tank is not specifically limited but is preferably 2.0 mass% or more, and more preferably 3.0 mass% or more, and is preferably 20.0 mass% or less, more preferably 8.0 mass% or less, and even more preferably 6.5 mass% or less. Setting the solid content concentration of the dispersion liquid containing the conductive material and the binder within any of the ranges set forth above enables good control of the particle diameter and coefficient of variation of the obtained composite particles. Moreover, the stirring time is not specifically limited and can be not less than 5 minutes and not more than 60 minutes, for example.

The temperature inside of the granulation tank is preferably lower than 50°C, more preferably 45°C or lower, and even more preferably 40°C or lower. Satisfaction of any of the temperature conditions set forth above can effectively inhibit degradation of the electrode active material that is contained in the obtained composite particles.

The composite particles that are produced in this manner can be used to obtain an electrode mixed material layer through a dry forming process such as pressure forming. The pressure forming can be performed by, for example, supplying the presently disclosed composite particles to a roll press and subjecting the composite particles to roll pressing on the electrode substrate so as to perform pressure forming of the composite particles on the electrode substrate and form an electrode mixed material layer, but is not specifically limited to being performed in this manner. The pressure during pressing can be set as appropriate in accordance with the target electrode density.

The electrode substrate is a material having electrical conductivity and electrochemical durability. Specifically, a current collector made of iron, copper, aluminum, nickel, stainless steel, titanium, tantalum, gold, platinum, or the like can be used as the electrode substrate. Note that one of the above-described materials may be used individually, or two or more of the above-described materials may be used in combination in a freely selected ratio.

An electrochemical device that is formed using the electrode for an electrochemical device obtained as described above can be a lithium ion secondary battery, an electric double-layer capacitor, or a lithium ion capacitor, for example, without any specific limitations, and can preferably be a lithium ion secondary battery. An electrochemical device that includes an electrode for an electrochemical device formed using the presently disclosed composite particles has excellent battery performance.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

Measurements and evaluations of various attributes in the examples and comparative examples were performed according to the following methods.

### <Breaking point test force (breaking strength)>

Composite particles produced in each example or comparative example were taken as a test sample. A tiny amount of the test sample was sprinkled onto a lower pressing plate of a micro compression tester (MCT-510 produced by Shimadzu Corporation), and particles were individually subjected to a compression test. The flat surface diameter of an upper pressing indenter was 100 µm. The surface detection mode was set as soft surface detection mode, the test force was set as 2.0 mN, and the loading rate was set as 0.04 mN/s. The particle diameter of the test sample was approximately 50 µm. Load was applied at the loading rate described above while monitoring the test force and the compressive displacement. When a plot of displacement (movement distance of indenter [µm]) on a horizontal axis and test force (force with which particle is compressed [mN]) on a vertical axis is prepared, a point at which the test force on the vertical axis remains constant even when the displacement on the horizontal axis changes is detected. The test force at this point was taken to be the "breaking point test force" for each test sample. The test was performed 5 times for each test sample, and an average value was taken to be the breaking point test force of that test sample.

### <Powder resistance of composite particles>

Powder resistance was measured for composite particles produced in each example or comparative example. In this measurement, 4.0 g of composite particles produced in each example or comparative example were loaded into a probe unit of a powder resistance measurement system MCP-PD51 produced by Mitsubishi Chemical Analytech Co., Ltd., and the powder resistance under pressing at 20 kN was measured.

The obtained measurement result was evaluated in accordance with the following standard.
A: 18.0 Ω or less
B: More than 18.0 Ω and not more than 22.0 Ω
C: More than 22.0 Ω and not more than 24.5 Ω
D: More than 24.5 Ω

### <Weight-average molecular weight of binder>

The weight-average molecular weight of a binder was measured as follows.
- GPC apparatus: HLC-8320GPC (produced by Tosoh Corporation)
- Column: TSKgel guardcolumn HHR-H (6.0 mm I.D. × 4 cm) × 1 column
   + TSKgel GMHHR-H (7.8 mm I.D. × 30 cm) × 2 columns (produced by Tosoh Corporation)
- Eluent: THF
- Detector: Differential refractometer (RI detector), polarity = (+)
- Flow rate: 1.0 mL/min
- Column temperature: 40°C
- Sample concentration: 1 mg/mL
- Sample injection volume: 100 µL
- Calibration curve: 3D approximation curve obtained using standard polystyrene produced by Tosoh Corporation

### (Example 1)

### <Production of binder>

A hydrogenated product of a styrene-butadiene-styrene block copolymer was produced as described below as a binder.

A reactor that included a stirring device and that had been thoroughly internally purged with nitrogen was charged with 270 parts of dehydrated cyclohexane and 0.53 parts of ethylene glycol dibutyl ether, and then 0.47 parts of n-butyllithium (15% cyclohexane solution) was further added thereto. All contents of the reactor were stirred at 60°C while 12.5 parts of dehydrated styrene was continuously added into the reactor over 40 minutes. Once this addition was complete, all contents of the reactor were further stirred in this state at 60°C for 20 minutes. The polymerization conversion rate at this point was determined to be 99.5% upon measurement of the reaction liquid by gas chromatography. Next, 200 parts of dehydrated butadiene was continuously added to the reaction liquid over 100 minutes, and stirring was continued in this state for 20 minutes after completion of the addition. The polymerization conversion rate at this point was 99.5%. Thereafter, a further 50 parts of dehydrated styrene was continuously added over 60 minutes, and stirring of all contents of the reactor was continued in this state for 30 minutes after completion of this addition. The polymerization conversion rate at this point was almost 100%. At this point, 0.5 parts of isopropyl alcohol was added to the reaction liquid to stop the reaction. The proportion constituted by structural units derived through 1,2- and 3,4-addition polymerization among all structural units derived from butadiene in the obtained block copolymer was 58%. Next, the polymer solution was transferred to a pressure-resistant reactor including a stirring device, 7.0 parts of nickel catalyst supported on diatomaceous earth carrier (produced by JGC Catalysts and Chemicals Ltd.; product name: E22U; supported nickel content: 60%) as a hydrogenation catalyst and 80 parts of dehydrated cyclohexane were added thereto, and mixing was performed. The inside of the reactor was purged with hydrogen gas, and hydrogen was also supplied into the reactor while stirring the solution so as to perform a hydrogenation reaction at a temperature of 190°C and a pressure of 4.5 MPa for 6 hours. Once the hydrogenation reaction was complete, the reaction solution was filtered to remove the hydrogenation catalyst, and then 1.0 parts of a xylene solution having 0.1 parts of pentaerythrityl tetrakis[3-(3,5-di-t-butyl-4-hydroxyphenyl)propionate] (produced by KOYO Chemical Research Center; product name: Songnox 1010) dissolved therein as a phenolic antioxidant was added to and dissolved in the filtrate. Cyclohexane was further added to produce a copolymer solution having a concentration of 10 mass%. The weight-average molecular weight of the produced copolymer was 2.2 × 10⁵.

### <Production of composite particles>

A device having the following configuration (denoted as "Granulator type A" in Table 1) was used as a granulator. This granulator included a circular tube shaped vessel having an internal diameter of 180 mm and an internal capacity of 2 L as a granulation tank and had agitators at two axes in a vertical direction (axial direction of circular tube shaped vessel) and a horizontal direction inside of the circular tube shaped vessel. (Note that the vertical direction corresponded to a main agitator and the horizontal direction corresponded to an auxiliary agitator.) The main agitator was an inclined paddle including three main blades of 170 mm in diameter, and the auxiliary agitator had a V-type anchor blade of 30 mm in diameter. The granulator also had a mechanism by which feedstock was prevented from entering driving parts of the main agitator and the auxiliary agitator through sealing by air ventilation. The granulator described above was used to produce composite particles.

First, 97.3 parts by mass of NMC (average particle diameter: 6 µm) as a positive electrode active material for a lithium ion battery was loaded into the granulation tank.

After mixing 2 parts of acetylene black (BET specific surface area: 133 m²/g; volume-average particle diameter: 23 nm) as a conductive material and 0.7 parts in terms of solid content of the binder, cyclohexane was further added as a solvent to prepare a mixture of the conductive material, the binder, and the solvent having a solid content concentration of 3.5 mass%. Next, the obtained mixture was subjected to dispersing treatment twice with a discharge pressure of 100 MPa using a NanoVater (NVC-ES008A produced by Yoshida Kikai Co., Ltd.) to produce a dispersion liquid containing the conductive material, the binder, and the solvent.

Next, ventilation with room temperature sealing air was performed at 20 L/min (ventilation rate: 10/min), and 2 parts by mass in terms of solid content of the composition containing the conductive material, the binder, and the solvent was continuously added over 50 minutes by two-fluid spraying under operating conditions of a main agitator circumferential speed of 6 m/s and an auxiliary agitator circumferential speed of 7 m/s. Operation of the main agitator and the auxiliary agitator was stopped at the same time as completion of addition was confirmed, thereby yielding composite particles. The previously described measurements were performed with respect to the produced composite particles. The results are shown in Table 1.

### (Example 2)

In "Production of composite particles", the solid content concentration of the dispersion liquid containing the conductive material, the binder, and the solvent was set as 5 mass%. With the exception of this point, composite particles were obtained in the same way as in Example 1, and measurements were performed with respect to the obtained composite particles in the same way as in Example 1. The results are shown in Table 1.

### (Comparative Example 1)

In "Production of composite particles", the binder that was compounded in the dispersion liquid containing the conductive material, the binder, and the solvent was changed to a binder having a small weight-average molecular weight. This binder was a hydrogenated product of a styrene-butadiene-styrene block copolymer that was produced as described below and had a weight-average molecular weight of 1.0 × 10⁵. With the exception that the binder obtained in this manner was used, composite particles were obtained in the same way as in Example 2, and measurements were performed with respect to the obtained composite particles in the same way as in Example 1. The results are shown in Table 1.

### <Production of binder>

A reactor that included a stirring device and that had been thoroughly internally purged with nitrogen was charged with 270 parts of dehydrated cyclohexane and 0.53 parts of ethylene glycol dibutyl ether, and then 0.47 parts of n-butyllithium (15% cyclohexane solution) was further added thereto. All contents of the reactor were stirred at 60°C while 12.5 parts of dehydrated styrene was continuously added into the reactor over 40 minutes. Once this addition was complete, all contents of the reactor were further stirred in this state at 60°C for 20 minutes. The polymerization conversion rate at this point was determined to be 99.5% upon measurement of the reaction liquid by gas chromatography. Next, 75 parts of dehydrated butadiene was continuously added to the reaction liquid over 100 minutes, and stirring was continued in this state for 20 minutes after completion of the addition. The polymerization conversion rate at this point was 99.5%. Thereafter, a further 12.5 parts of dehydrated styrene was continuously added over 60 minutes, and stirring of all contents of the reactor was continued in this state for 30 minutes after completion of this addition. The polymerization conversion rate at this point was almost 100%. At this point, 0.5 parts of isopropyl alcohol was added to the reaction liquid to stop the reaction. The proportion constituted by structural units derived through 1,2- and 3,4-addition polymerization among all structural units derived from butadiene in the obtained block copolymer was 58%. Next, the polymer solution was transferred to a pressure-resistant reactor including a stirring device, 7.0 parts of nickel catalyst supported on diatomaceous earth carrier (produced by JGC Catalysts and Chemicals Ltd.; product name: E22U; supported nickel content: 60%) as a hydrogenation catalyst and 80 parts of dehydrated cyclohexane were added thereto, and mixing was performed. The inside of the reactor was purged with hydrogen gas, and hydrogen was also supplied into the reactor while stirring the solution so as to perform a hydrogenation reaction at a temperature of 190°C and a pressure of 4.5 MPa for 6 hours. Once the hydrogenation reaction was complete, the reaction solution was filtered to remove the hydrogenation catalyst, and then 1.0 parts of a xylene solution having 0.1 parts of pentaerythrityl tetrakis[3-(3,5-di-t-butyl-4-hydroxyphenyl)propionate] (produced by KOYO Chemical Research Center; product name: Songnox 1010) dissolved therein as a phenolic antioxidant was added to and dissolved in the filtrate. Cyclohexane was further added to produce a copolymer solution having a concentration of 10 mass%.

### (Comparative Example 2)

With the exception that the used granulator was changed to a granulator in which the rotation axis of the auxiliary agitator was in the vertical direction (denoted as "Granulator type B" in Table 1), composite particles were obtained in the same way as in Example 2, and measurements were performed with respect to the obtained composite particles in the same way as in Example 1. The results are shown in Table 1.

**[Table 1]**

| | | Example 1 | Example 2 | Comparative Example 1 | Comparative Example 2 |
|---|---|---|---|---|---|
| Chemical composition ratio | Positive electrode active material [parts by mass] | 97.3 | 97.3 | 97.3 | 97.3 |
| | Conductive material [parts by mass] | 2 | 2 | 2 | 2 |
| | Binder [parts by mass] | 0.7 | 0.7 | 0.7 | 0.7 |
| Binder weight-average molecular weight [-] | | 2.2 × 10⁵ | 2.2 × 10⁵ | 1.0 × 10⁵ | 2.2 × 10⁵ |
| Production conditions | Granulation method | Stirred granulation | Stirred granulation | Stirred granulation | Stirred granulation |
| | Granulator type | A | A | A | B |
| | Granulator scale [L] | 2 | 2 | 2 | 25 |
| | Liquid solid content [mass%] (conductive material + binder) | 3.5 | 5 | 5 | 5 |
| Composite particle performance | Breaking point test force [mN] | 0.73 | 0.49 | 0.33 | 1.84 |
| | Powder resistance under 20 kN pressing [Ω] | 17.3 | 19.09 | 23.09 | 25.19 |
| | Resistance evaluation | A | B | C | D |

It can be seen from Table 1 that the composite particles of Examples 1 and 2, which had a breaking strength (breaking point test force) within a specific range, had sufficiently low electrical resistance. It can also be seen that the composite particles of Comparative Examples 1 and 2, which had a breaking strength (breaking point test force) outside of the specific range, had higher electrical resistance than the composite particles produced in Examples 1 and 2.

### INDUSTRIAL APPLICABILITY

According to the present disclosure, it is possible to provide composite particles having low electrical resistance.

### REFERENCE SIGNS LIST

- 1: granulation tank
- 2: main agitator
- 21: main blade
- 3: auxiliary agitator
- 31: auxiliary blade
- RA1: first stirring axis
- RA2: second stirring axis

## Claims

1. Composite particles for use in dry forming of an electrode for an electrochemical device, comprising an electrode active material, a conductive material, and a binder, wherein
the composite particles have a breaking point test force of not less than 0.40 mN and not more than 1.60 mN when compressed at a loading rate of 0.04 mN/s using a micro compression tester.

2. The composite particles according to claim 1, wherein the binder has a weight-average molecular weight of not less than 0.1 × 10⁵ and not more than 10.0 × 10⁵.
